# EUROPEAN PATENT APPLICATION

(11) **EP 3 382 278 A1**
(43) Date of publication of application: **03.10.2018**
(21) Application number: 18162531.0
(22) Date of filing: 19.03.2018
(51) Int. Cl.: F23R 3/00

(54) **COMBUSTOR PANEL HEAT TRANSFER PINS WITH VARYING GEOMETRIC SPECIFICATIONS AND METHOD OF MANUFACTURING THE PANEL**

(30) Priority: 29.03.2017 US 201715473312
(71) Applicant: United Technologies Corporation, Farmington, CT 06032 (US)
(72) Inventor: LEMOINE, Jonathan, Vernon, CT Connecticut 06066 (US); ZACCHERA, Kevin, Glastonbury, CT Connecticut 06033 (US); EASTWOOD, Jonathan Jeffery, West Hartford, CT Connecticut 06117 (US)
(74) Representative: Dehns

(57) **Abstract**

A combustor panel (108) may include a combustion facing surface, a cooling surface opposite the combustion facing surface, a first heat transfer pin (151) extending from the cooling surface having a first geometric specification, and a second heat transfer pin (152) extending from the cooling surface having a second geometric specification. The first geometric specification may be different than the second geometric specification. The first geometric specification may be a first height of the first pin (151) and the second geometric specification may be a second height of the second pin (152)

## Description

### FIELD

The present disclosure relates to gas turbine engines, and more specifically, to combustors of gas turbine engines.

### BACKGROUND

A gas turbine engine typically includes a fan section, a compressor section, a combustor section, and a turbine section. A fan section may drive air along a bypass flowpath while a compressor section may drive air along a core flowpath. In general, during operation, air is pressurized in the compressor section and is mixed with fuel and burned in the combustor section to generate hot combustion gases. The hot combustion gases flow through the turbine section, which extracts energy from the hot combustion gases to power the compressor section and other gas turbine engine loads. The compressor section typically includes low pressure and high pressure compressors, and the turbine section includes low pressure and high pressure turbines.

Combustors used in gas turbine engines rely on combustor panels as thermal shields and to guide combustion gases into the turbine. These combustor panels interface with hot combustion gases and are often susceptible to structural damage and/or oxidation caused by the high temperature of the combustion gases.

### SUMMARY

In various embodiments, the present disclosure provides a combustor panel of a combustor. The combustor panel may include a combustion facing surface, a cooling surface opposite the combustion facing surface, a first heat transfer pin extending from the cooling surface having a first geometric specification, and a second heat transfer pin extending from the cooling surface having a second geometric specification. The first geometric specification may be different than the second geometric specification.

In various embodiments, the first geometric specification is a first height of the first heat transfer pin and the second geometric specification is a second height of the second heat transfer pin. In various embodiments, wherein other geometric specifications of the first heat transfer pin and the second heat transfer pin, other than the first geometric specification and the second geometric specification, respectively, are the same. In various embodiments, the first geometric specification is a first height of the first heat transfer pin, the second geometric specification is a second height of the second heat transfer pin, and the other geometric specifications of the first heat transfer pin and the second heat transfer pin comprise cross-sectional shape and cross-sectional dimension.

In various embodiments, the first heat transfer pin is one of a first plurality of heat transfer pins having the first geometric specification and the second heat transfer pin is one of a second plurality of heat transfer pins having the second geometric specification. In various embodiments, a first spacing between adjacent heat transfer pins of the first plurality of heat transfer pins is the same as a second spacing between adjacent heat transfer pins of the second plurality of heat transfer pins. In various embodiments, the first plurality of heat transfer pins extends from a first portion of the combustor panel and the second plurality of heat transfer pins extends from a second portion of the combustor panel. In such embodiments, combustion gases may be configured to flow across the combustion facing surface of the first portion of the combustor panel at a first temperature and across the combustion facing surface of the second portion of the combustor panel at a second temperature, wherein the first temperature is different than the second temperature.

In various embodiments, the first geometric specification of the first plurality of heat transfer pins and the second geometric specification of the second plurality of heat transfer pins are such that a temperature gradient of the combustor panel from the first portion to the second portion is reduced (e.g., reduced as compared to a combustor that did not have heat transfer pins with varying geometric specifications). In various embodiments, the combustor panel further includes a third heat transfer pin extending from the cooling surface having a third geometric specification, wherein the first geometric specification, the second geometric specification, and the third geometric specification are different from each other.

The present disclosure also provides a combustor of a gas turbine engine, according to various embodiments. The combustor may include a combustor shell comprising a diffuser side facing a diffuser chamber and a combustor side facing a combustor chamber. The combustor may also include a combustor panel coupled to the combustor side of the combustor shell, wherein the combustor panel comprises a combustion surface facing the combustion chamber and a cooling surface facing the combustor side of the combustor shell. The combustor may also include a first heat transfer pin extending from the cooling surface of the combustor panel and having a first geometric specification and a second heat transfer pin extending from the cooling surface of the combustor panel and having a second geometric specification. The first geometric specification may be different than the second geometric specification.

In various embodiments, the first geometric specification is a first height of the first heat transfer pin and the second geometric specification is a second height of the second heat transfer pin. In various embodiments, the first height is greater than half a distance between the combustor panel and the combustor shell and the second height is equal to or less than half the distance between the combustor panel and the combustor shell. In various embodiments, other geometric specifications of the first heat transfer pin and the second heat transfer pin, other than the first geometric specification and the second geometric specification, respectively, are the same. In various embodiments, the first geometric specification is a first height of the first heat transfer pin, the second geometric specification is a second height of the second heat transfer pin, and the other geometric specifications of the first heat transfer pin and the second heat transfer pin comprise cross-sectional shape and cross-sectional dimension.

In various embodiments, the first heat transfer pin is one of a first plurality of heat transfer pins having the first geometric specification and the second heat transfer pin is one of a second plurality of heat transfer pins having the second geometric specification. In various embodiments, a first spacing between adjacent pins of the first plurality of heat transfer pins is the same as a second spacing between adjacent pins of the second plurality of heat transfer pins. In various embodiments, the first plurality of heat transfer pins extends from a first portion of the combustor panel and the second plurality of heat transfer pins extends from a second portion of the combustor panel, wherein combustion gases are configured to flow across the combustion facing surface of the first portion of the combustor panel at a first temperature and across the combustion facing surface of the second portion of the combustor panel at a second temperature, wherein the first temperature is different than the second temperature. The first geometric specification of the first plurality of heat transfer pins and the second geometric specification of the second plurality of heat transfer pins may be such that a temperature gradient of the combustor panel from the first portion to the second portion is minimized.

Also disclosed herein, according to various embodiments, is a method of manufacturing a combustor. The method may include determining a first expected temperature of combustion gases at a first location within a combustor, determining a second expected temperature of the combustion gases at a second location within the combustor, and forming a combustor panel that includes a first plurality of heat transfer pins having a first geometric specification that is dependent on the first expected temperature and that comprises a second plurality of heat transfer pins having a second geometric specification that is dependent on the second expected temperature. In various embodiments, the first plurality of heat transfer pins extends from a cooling surface of a first portion of the combustor panel and the second plurality of heat transfer pins extends from the cooling surface of a second portion of the combustor panel, wherein the first portion of the combustor panel is disposed adjacent the first location and the second portion of the combustor panel is disposed adjacent the second location.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates a cross-sectional view of an exemplary gas turbine engine, in accordance with various embodiments;
FIG. 2 illustrates a cross-sectional view of a combustor of gas turbine engine, in accordance with various embodiments;
FIG. 3 illustrates a cross-sectional view of a combustor shell and a combustor panel, in accordance with various embodiments;
FIG. 4 illustrates a perspective view of a cooling surface of a combustor panel having heat transfer pins extending therefrom, in accordance with various embodiments;
FIG. 5 illustrates a cross-sectional view of heat transfer pins having varying geometric specifications, in accordance with various embodiments; and
FIG. 6 is a schematic flowchart diagram of a method of manufacturing a combustor of a gas turbine engine, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the spirit and scope of the disclosure. Thus, the detailed description herein is presented for purposes of illustration only and not of limitation.

As used herein, "aft" refers to the direction associated with the exhaust (e.g., the back end) of a gas turbine engine. As used herein, "forward" refers to the direction associated with the intake (e.g., the front end) of a gas turbine engine.

A first component that is "axially outward" of a second component means that a first component is positioned at a greater distance in the aft or forward direction away from the longitudinal center of the gas turbine along the longitudinal axis of the gas turbine, than the second component. A first component that is "axially inward" of a second component means that the first component is positioned closer to the longitudinal center of the gas turbine along the longitudinal axis of the gas turbine, than the second component.

A first component that is "radially outward" of a second component means that the first component is positioned at a greater distance away from the engine central longitudinal axis than the second component. A first component that is "radially inward" of a second component means that the first component is positioned closer to the engine central longitudinal axis than the second component. In the case of components that rotate circumferentially about the engine central longitudinal axis, a first component that is radially inward of a second component rotates through a circumferentially shorter path than the second component. The terminology "radially outward" and "radially inward" may also be used relative to references other than the engine central longitudinal axis. For example, a first component of a combustor that is radially inward or radially outward of a second component of a combustor is positioned relative to the central longitudinal axis of the combustor.

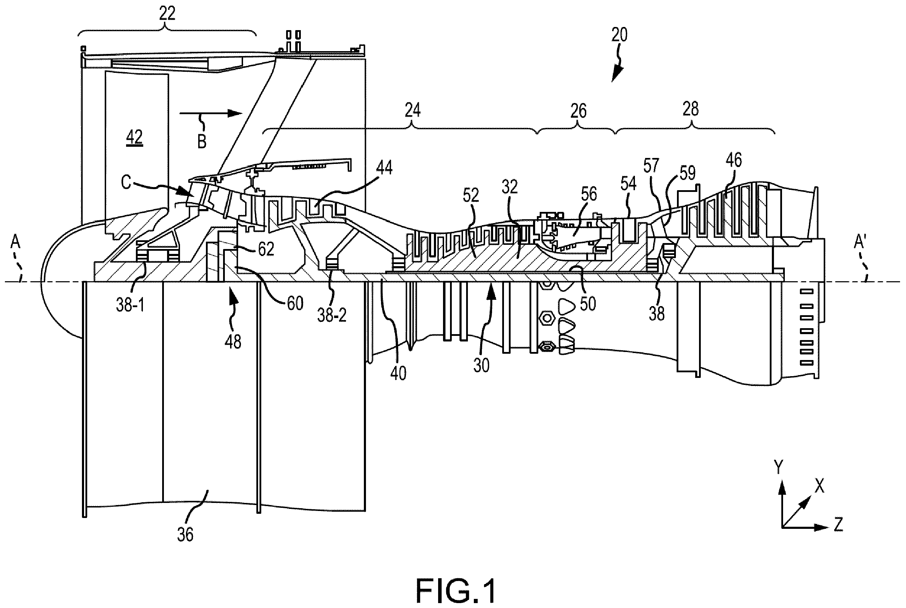

In various embodiments and with reference to FIG. 1, a gas turbine engine 20 is provided. Gas turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive coolant (e.g., air) along a bypass flow-path B while compressor section 24 can drive coolant along a core flow-path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 30 and a high speed spool 32 mounted for rotation about an engine central longitudinal axis A-A' relative to an engine static structure 36 or engine case via several bearing systems 38, 38-1, and 38-2. Engine central longitudinal axis A-A' is oriented in the z direction on the provided xyz axis. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54.

A combustor 56 may be located between high pressure compressor 52 and high pressure turbine 54. The combustor section 26 may have an annular wall assembly having inner and outer shells that support respective inner and outer heat shielding liners. The heat shield liners may include a plurality of combustor panels that collectively define the annular combustion chamber of the combustor 56. An annular cooling cavity is defined between the respective shells and combustor panels for supplying cooling air. Impingement holes are located in the shell to supply the cooling air from an outer air plenum and into the annular cooling cavity.

A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about five (5). In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about five (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other gas turbine engines including direct drive turbofans. A gas turbine engine may comprise an industrial gas turbine (IGT) or a geared aircraft engine, such as a geared turbofan, or non-geared aircraft engine, such as a turbofan, or may comprise any gas turbine engine as desired.

As mentioned above, the high operating temperatures and pressure ratios of the combustion gases in the combustor section 26 may create operating environments that damage the various components, such as the combustor panels, and thereby shorten the operational life of the combustor panels. The details of the present disclosure relate to apparatuses, systems, and methods for cooling combustor panels. The details of the present disclosure may be implemented in new gas turbine engines/combustors and may be implemented to repair, retrofit, and/or otherwise modify existing gas turbine engines/combustors.

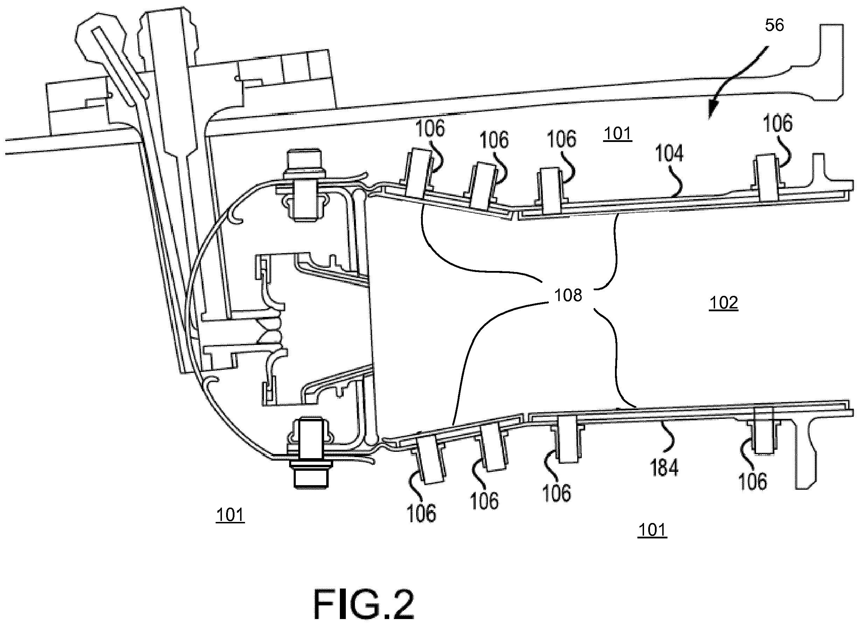

With reference to FIG. 2, an in accordance with various embodiments, one or more combustor panels 108 (e.g., thermal shields, combustor liners) may be positioned in combustor 56 to protect various features of the combustor 56 from the high temperature flames and/or combustion gases. The combustor 56, in various embodiments, may have a combustor chamber 102 defined by a combustor outer shell 104 and a combustor inner shell 184. A diffuser chamber 101 is external the combustor 56 and cooling air may be configured to flow through the diffuser chamber 101 around the combustor 56. The combustor chamber 102 may form a region of mixing of core airflow C (with brief reference to FIG. 1) and fuel, and may direct the high-speed exhaust gases produced by the ignition of this mixture inside the combustor 56. The combustor outer shell 104 and the combustor inner shell 184 may provide structural support to the combustor 56 and its components. For example, a combustor outer shell 104 and a combustor inner shell 184 may comprise a substantially cylindrical canister portion defining an inner area comprising the combustor chamber 102.

As mentioned above, it may be desirable to protect the combustor outer shell 104 and the combustor inner shell 184 from the harmful effects of high temperatures. Accordingly, one or more combustor panels 108 may be disposed inside the combustor chamber 102 and may provide such protection.

The combustor panels 108 may comprise a partial cylindrical or conical surface section. An outer combustor thermal panel may be arranged radially inward of the combustor outer shell 104, for example, circumferentially about the inner surface of the combustor outer shell 104 and one or more inner combustor panels may also be arranged radially outward of the combustor inner shell 184. The combustor panels 108 may comprise a variety of materials, such as metal, metal alloys, and/or ceramic matrix composites, among others

With continued reference to FIG. 2 and as mentioned above, the combustor panels 108 may be mounted/coupled to the combustor shell 104/184 via one or more attachment features 106. The combustor panels 108 may be made of any suitable heat tolerant material. In this manner, the combustor panels 108 may be substantially resistant to thermal mechanical fatigue in order to inhibit cracking of the combustor panels 108 and/or to inhibit liberation of portions of the combustor panels 108. In various embodiments, the combustor panels 108 may be made from a nickel based alloy and/or a cobalt based alloy, among others. For example, the combustor panels 108 may be made from a high performance nickel-based super alloy. In various embodiments, the combustor panels 108 may be made from a cobalt-nickel-chromium-tungsten alloy. Additional details pertaining to the method of manufacturing the combustor 56 and the combustor panels 108 are included below with reference to FIG. 8.

The one or more attachment features 106 facilitate coupling and/or mounting the combustor panels 108 to the respective shells 104, 184 of the combustor 56. In various embodiments, the attachment features 106 may be a boss or a stud extending radially relative to the combustor panels 108. In various embodiments, the attachment feature 106 is a cylindrical boss, such as a threaded pin, or may be a rectangular boss, such as for receiving a clip, or may be any other apparatus whereby the combustor panel 108 is mounted to the combustor outer shell 104 or the combustor inner shell 184. In various embodiments, the attachment feature 106 comprises a threaded stud that extends through a corresponding aperture in the combustor outer shell 104 or the combustor inner shell 184, and is retained in position by an attachment nut disposed outward of the combustor outer shell 104 and torqued so that the attachment feature 106 is preloaded with a retaining force and securely affixes the combustor panel 108 in a substantially fixed position relative to the combustor outer shell 104 or the combustor inner shell 184.

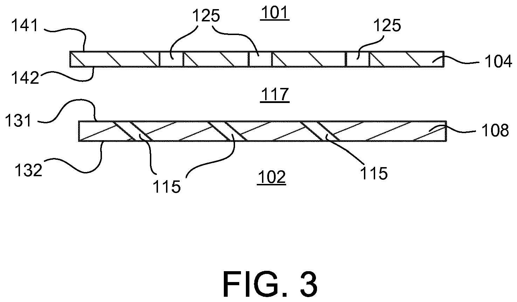

In various embodiments, and with reference to FIG. 3, a first annular cooling cavity 117 is formed/defined between a combustor shell 104 and a combustor panel 108. As mentioned above, cooling air in the diffuser chamber 101 may enter the annular cooling cavity 117 via impingement holes 125 formed in the combustor shell 104. That is, impingement holes 125 may extend from a diffuser side 141 of the combustor shell 104 to a combustor side 142 of the combustor shell 104 and may supply cooling air to the annular cooling cavity 117. The cooling air in the annular cooling cavity 117 may enter the combustor chamber 102 via effusion holes 115 formed in the combustor panel 108. That is, effusion holes 115 may extend from a cooling surface 131 of the combustor panel 108 to a combustion facing surface 132 of the combustor panel 108 that is opposite the cooling surface 131. In various embodiments, the effusion holes 115 are generally oriented to create a protective "blanket" of air film over the combustion facing surface 132 of the combustor panel 108 thereby protecting the combustor panel 108 from the hot combustion gases in the combustor chamber 102.

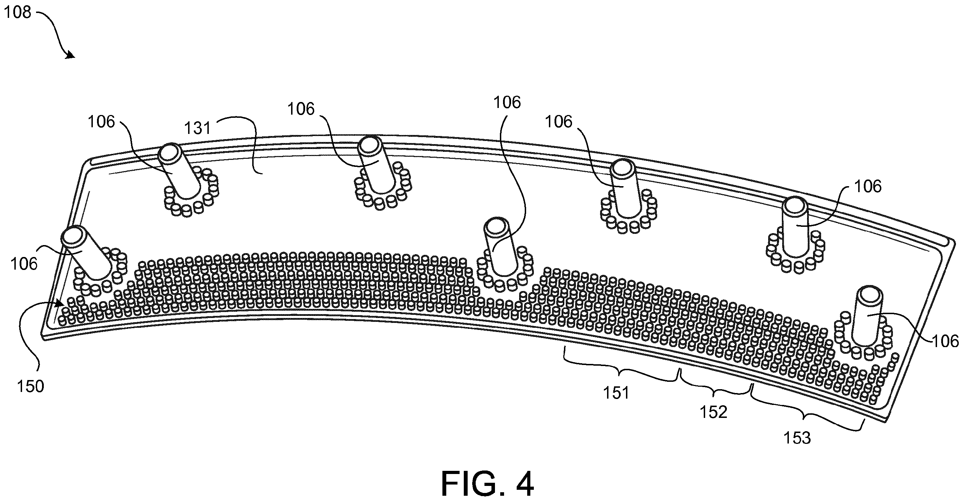

In various embodiments, and with reference to FIG. 4, one or more heat transfer pins 150 extend from the cooling surface 131 of the combustor panel 108. In FIG. 4, the effusion holes 115 are not shown in order to clearly show the heat transfer pines 150. The heat transfer pins 150, according to various embodiments, are pins extending radially from the cooling surface 131 of the combustor panel 108. The heat transfer pins 131 generally extend into the annular cooling cavity 117 to improve the convective transfer of heat from combustor panel 108. The heat transfer pins 150 may have various cross-sectional shapes, such as cylindrical, rectangular, or other polygonal shape.

In various embodiments, the heat transfer pins 150 may include one or more first heat transfer pins 151 that have a first geometric specification and one or more second heat transfer pins 152 that have a second geometric specification that is different than the first geometric specification. In various embodiments, the heat transfer pins 150 may further include third heat transfer pins 153 (e.g., a third heat transfer pin or a third plurality of heat transfer pins) that have a third geometric specification, wherein the first, second, and third geometric specifications are different from each other (e.g., the first, second, and third heat transfer pins 151, 152, 153 may have different shapes or may be sized differently. According to various embodiments, the heat transfer pins 150 vary in size, shape, geometry, periphery, circumference, and/or overall dimension (i.e., "geometric specification").

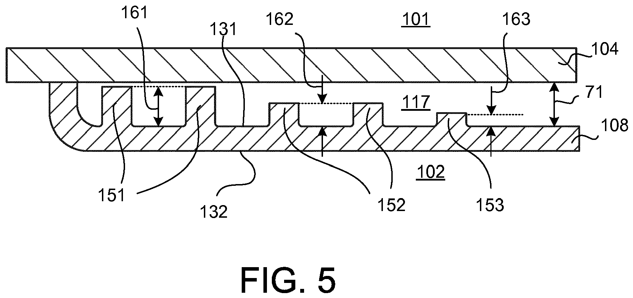

In various embodiments, the geometric specification of the individual heat transfer pins 150 varies while the spacing between adjacent heat transfer pins remains constant. For example a first spacing between adjacent heat transfer pins of the first plurality of heat transfer pins is the same as a second spacing between adjacent heat transfer pins of the second plurality of heat transfer pins. In various embodiments, the geometric specification of the individual heat transfer pins 150 varies while the spatial density of the heat transfer pins across the cooling surface 131 of the combustor panel remains constant (e.g., substantial uniformity of the spatial density - the same spacing between adjacent heat transfer pins - may have various manufacturing benefits, such as reduced cost/complexity). Additional details pertaining to the geometric specifications of the heat transfer pins 150 are included below with reference to FIG. 5. The variation of the geometric specification of the heat transfer pins 150 allows for a corresponding variation in heat transfer from the combustor panel 108.

For example, in various embodiments the first plurality of heat transfer pins 151 has a first geometric specification that results in each of heat transfer pins of the first plurality of heat transfer pins 151 having a comparatively larger surface area than each of the heat transfer pins of the second plurality of heat transfer pins 152. The larger surface area of the first heat transfer pins 151, according to various embodiments, results in higher local heat transfer from the combustor panel.

In various embodiments, the combustion gases within the combustion chamber 102 (see FIGS. 2 and 3) may not have a uniform temperature throughout the combustor 56. That is, the combustor 56 may have "hotspots." The term "hotspot" may refer to a location within a combustor where the combustion gases are at a comparatively higher temperature than other locations within the combustor (e.g., the term "hotspot" refers to a volume/region within the combustion chamber 66, and does not refer to a section/region of the combustor panel(s) 108). Without the variation in the geometric specifications of the heat transfer pins 150 disclosed herein, the hotspots would result in a corresponding temperature non-uniformity in the combustor panel 108 (i.e., a temperature gradient), which would potentially increase the thermally induced stresses in the combustor panel and result in a shorter lifecycle. Accordingly, the combustor panel 108 may be configured and designed to have heat transfer pins 150 with varying geometric specifications that correspond to the expected location of hotspots of the combustion gases within the combustor 56. That is, the first plurality of heat transfer pins 151 extending from a first portion of the combustor panel 108 and the second plurality of heat transfer pins 152 extending from a second portion of the combustor panel 108 may have respective geometric specifications that correspond with the expected temperature of combustion gases that are configured to flow across the respective portions of the combustion facing surface 132 of the combustor panel 108. In various embodiments, the first geometric specification of the first plurality of heat transfer pins 151 and the second geometric specification of the second plurality of heat transfer pins 152 are designed such that the temperature gradient of the combustor panel from the first portion to the second portion is reduced and/or minimized.

In various embodiments, and with reference to FIG. 5, the geometric specification of the heat transfer pins 150 that varies is the height (e.g., the distance the heat transfer pins protrude from the cooling surface 131 of the combustor panel 108). The one or more first heat transfer pins 151 may have a first height 161 and the one or more second heat transfer pins 152 may have a second height 162 that is different than the first height 161. As mentioned above, the combustor panel 108 may include other sets of heat transfer pins having other heights, such as the third heat transfer pin 153 having a third height 163 that is different than both the first height 161 and the second height 162. In various embodiments, the heat transfer pins 150 may be similar except for the varying geometric specification. For example, the first height 161 and the second height 162 of the first heat transfer pins 151 and the second heat transfer pins 152, respectively, may be different, but the other geometric specifications of the first and second heat transfer pins 151, 152, such as the cross-sectional shape, the cross-sectional dimension, etc., may be the same.

In various embodiments, and with continued reference to FIG. 5, the first height 161 of the first pin 151 is greater than half a distance 71 between the combustor panel 108 and the combustor shell 104 (e.g., the span of the annular cooling cavity 117) and the second height 162 of the second pin 152 is equal to or less than half the distance 71 between the combustor panel 108 and the combustor shell 104. In various embodiments, the height of the various heat transfer pins 150 may range between about 10% and about 90% of the distance 71 between the combustor panel 108 and the combustor shell 104. In various embodiments, the height of the various heat transfer pins 150 may range between about 25% and about 70% of the distance 71 between the combustor panel 108 and the combustor shell 104. As used in this context, the term "about" refers to plus or minus 5%.

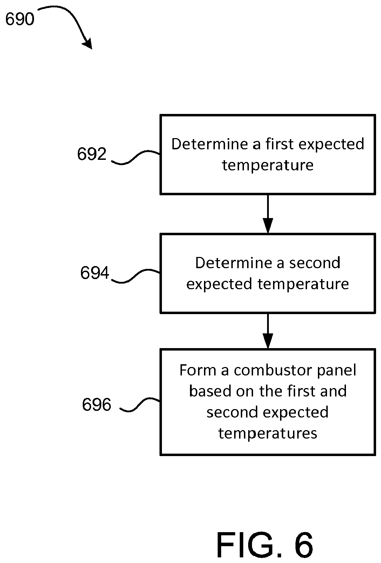

In various embodiments, and with reference to FIG. 6, a method 690 of manufacturing a combustor is provided. The method 690 includes, according to various embodiments, determining a first expected temperature at step 692 and determining a second expected temperature at step 694. The first expected temperature of step 692, according to various embodiments, refers to an expected temperature of combustion gases at a first location within a combustion chamber of the combustor and the second expected temperature of step 694, according to various embodiments, refers to an expected temperature of combustion gases at a second location within a combustion chamber of the combustor. The expected temperatures of the combustion gases at locations within the combustion chamber may be determined by measuring and/or observing a three dimensional temperature profile of combustion gases within a combustion chamber.

The method 690 further includes forming a combustor panel based on the first and second expected temperatures at step 696, according to various embodiments. Forming the combustor panel at step 696 may include forming a first plurality of heat transfer pins having a first geometric specification that is dependent on the first expected temperature and forming a second plurality of heat transfer pins having a second geometric specification that is dependent on the second expected temperature. For example, the first plurality of heat transfer pins may be formed to have a larger surface area (e.g., have a higher height) and may be formed along regions/sections of the combustor panel that are adjacent to the location of the hotspots of the combustion gases within the combustion chamber.

In various embodiments, the first plurality of heat transfer pins extends from a cooling surface of a first portion of the combustor panel and the second plurality of heat transfer pins extends from the cooling surface of a second portion of the combustor panel, wherein the first portion of the combustor panel is disposed adjacent the first location and the second portion of the combustor panel is disposed adjacent the second location. In various embodiments, forming the combustor panel at step 696 is done by casting a metal material.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A combustor panel of a combustor, the combustor panel comprising:
a combustion facing surface;
a cooling surface opposite the combustion facing surface;
a first heat transfer pin extending from the cooling surface having a first geometric specification; and
a second heat transfer pin extending from the cooling surface having a second geometric specification;
wherein the first geometric specification is different than the second geometric specification.

2. The combustor panel of claim 1, wherein the first geometric specification is a first height of the first heat transfer pin and the second geometric specification is a second height of the second heat transfer pin.

3. The combustor panel of claim 1 or 2, wherein other geometric specifications of the first heat transfer pin and the second heat transfer pin, other than the first geometric specification and the second geometric specification, respectively, are the same,
wherein, optionally, the first geometric specification is a first height of the first heat transfer pin, the second geometric specification is a second height of the second heat transfer pin, and the other geometric specifications of the first heat transfer pin and the second heat transfer pin comprise cross-sectional shape and cross-sectional dimension.

4. The combustor panel of claim 1, 2 or 3, wherein the first heat transfer pin is one of a first plurality of heat transfer pins having the first geometric specification and the second heat transfer pin is one of a second plurality of heat transfer pins having the second geometric specification.

5. The combustor panel of claim 4, wherein a first spacing between adjacent heat transfer pins of the first plurality of heat transfer pins is the same as a second spacing between adjacent heat transfer pins of the second plurality of heat transfer pins.

6. The combustor panel of claim 4 or 5, wherein the first plurality of heat transfer pins extends from a first portion of the combustor panel and the second plurality of heat transfer pins extends from a second portion of the combustor panel, wherein combustion gases are configured to flow across the combustion facing surface of the first portion of the combustor panel at a first temperature and across the combustion facing surface of the second portion of the combustor panel at a second temperature, wherein the first temperature is different than the second temperature,
wherein, optionally, the first geometric specification of the first plurality of heat transfer pins and the second geometric specification of the second plurality of heat transfer pins are such that a temperature gradient of the combustor panel from the first portion to the second portion is reduced.

7. The combustor panel of any preceding claim, further comprising a third heat transfer pin extending from the cooling surface having a third geometric specification, wherein the first geometric specification, the second geometric specification, and the third geometric specification are different from each other.

8. A combustor of a gas turbine engine, the combustor comprising:
a combustor shell comprising a diffuser side facing a diffuser chamber and a combustor side facing a combustor chamber;
a combustor panel coupled to the combustor side of the combustor shell, wherein the combustor panel comprises a combustion surface facing the combustion chamber and a cooling surface facing the combustor side of the combustor shell;
a first heat transfer pin extending from the cooling surface of the combustor panel and having a first geometric specification; and
a second heat transfer pin extending from the cooling surface of the combustor panel and having a second geometric specification;
wherein the first geometric specification is different than the second geometric specification.

9. The combustor of claim 8, wherein the first geometric specification is a first height of the first heat transfer pin and the second geometric specification is a second height of the second heat transfer pin,
wherein, optionally, the first height is greater than half a distance between the combustor panel and the combustor shell and the second height is equal to or less than half the distance between the combustor panel and the combustor shell.

10. The combustor of claim 8 or 9, wherein other geometric specifications of the first heat transfer pin and the second heat transfer pin, other than the first geometric specification and the second geometric specification, respectively, are the same,
wherein, optionally, the first geometric specification is a first height of the first heat transfer pin, the second geometric specification is a second height of the second heat transfer pin, and the other geometric specifications of the first heat transfer pin and the second heat transfer pin comprise cross-sectional shape and cross-sectional dimension.

11. The combustor panel of any of claims 8 to 10, wherein the first heat transfer pin is one of a first plurality of heat transfer pins having the first geometric specification and the second heat transfer pin is one of a second plurality of heat transfer pins having the second geometric specification.

12. The combustor panel of claim 11, wherein a first spacing between adjacent pins of the first plurality of heat transfer pins is the same as a second spacing between adj acent pins of the second plurality of heat transfer pins.

13. The combustor panel of claim 11 or 12, wherein the first plurality of heat transfer pins extends from a first portion of the combustor panel and the second plurality of heat transfer pins extends from a second portion of the combustor panel, wherein combustion gases are configured to flow across the combustion facing surface of the first portion of the combustor panel at a first temperature and across the combustion facing surface of the second portion of the combustor panel at a second temperature, wherein the first temperature is different than the second temperature,
wherein,optionally, the first geometric specification of the first plurality of heat transfer pins and the second geometric specification of the second plurality of heat transfer pins are such that a temperature gradient of the combustor panel from the first portion to the second portion is minimized.

14. A method of manufacturing a combustor, the method comprising:
determining a first expected temperature of combustion gases at a first location within a combustor;
determining a second expected temperature of the combustion gases at a second location within the combustor; and
forming a combustor panel that comprises a first plurality of heat transfer pins having a first geometric specification that is dependent on the first expected temperature and that comprises a second plurality of heat transfer pins having a second geometric specification that is dependent on the second expected temperature.

15. The method of claim 14, wherein the first plurality of heat transfer pins extends from a cooling surface of a first portion of the combustor panel and the second plurality of heat transfer pins extends from the cooling surface of a second portion of the combustor panel, wherein the first portion of the combustor panel is disposed adjacent the first location and the second portion of the combustor panel is disposed adjacent the second location.
